Europäisches Patentamt

European Patent Office

Office européen des brevets

(11) Publication number: **0 232 072**
**A2**

# EUROPEAN PATENT APPLICATION

(21) Application number: **87300528.4**

(22) Date of filing: **22.01.87**

(51) Int. Cl.⁴: **B 62 D 9/00**
**B 62 D 11/04, B 60 K 1/02**

(30) Priority: **25.01.86 GB 8601841**

(43) Date of publication of application:
**12.08.87 Bulletin 87/33**

(84) Designated Contracting States: **DE GB IT SE**

(71) Applicant: **YALE MATERIALS HANDLING LIMITED**
**Waddensbrook Lane**
**Wednesfield West Midlands WV11 3SW (GB)**

(72) Inventor: **Jones, John**
**45, Sherringham Drive**
**Essington Wolverhampton (GB)**

**Uccellini, Rinaldo Guisseppi**
**45, Springfield Road**
**Wolverhampton (GB)**

(74) Representative: **Campbell, Iain Angus**
**Swindell & Pearson 44 Friar Gate**
**Derby DE1 1DA (GB)**

(54) Improvements in or relating to vehicle control arrangements.

(57) A control arrangement for the traction motors of a three wheeled electrically powered vehicle in which the pair of non-steered wheels each have a separate traction motor, the arrangement having two pairs of non-mechanical sensors, for example, opto-interrupters (52-58) fixed to the vehicle in the path of an optical shield (50) which moves with the steered wheel to signal to a logic circuit (60) to which the interrupters are connected when the steered wheel reaches certain predetermined angles whereby the circuit shuts off or reverses the appropriate traction motor to increase the vehicle's manoeuvrability.

*FIG.1*

**Description**

Improvements in or Relating to Vehicle Control Arrangements

The present invention concerns improvements in or relating to vehicles, especially but not exclusively electrically propelled vehicles, particularly three-wheeled electrically propelled vehicles, for example a fork-lift truck, where the single wheel is steered and the remaining pair of wheels are each provided with an electric traction motor.

To assist the manoeuvring of such vehicles it has been proposed in the past to allow the traction motor for the inner wheel of a turning vehicle to coast or drive the inner wheel in reverse depending upon the angle of the steered wheel. Such past systems have used a cam rotatable with the steered wheel to actuate microswitches, normally two to each side of the fore-and-aft axis, to actuate the contactors controlling the power supply to each traction motor.

Such prior arrangements have been disadvantageous, not only as a result of the relatively expensive nature of the relays etc. and the time and expense of setting them up, but, more importantly, as a result of defects in operation due, for example, to failures of the microswitches or reduction in their efficiency on contamination by grease and dirt.

It is an object of the present invention to obviate or mitigate these disadvantages according to the present invention there is provided a control arrangement for the traction motors of a three-wheeled electrically powered vehicle having a single steered wheel, the other wheels each provided with a separate traction motor, the arrangement comprising at least one member movable on movement of the steered wheel and adapted to co-operate with at least one non-mechanical sensor, the signal from which is utilised to control the power supply to one other, or both traction motors.

Preferably the non-mechanical sensor is an opto-interrupter and the member is an optical shield.

Preferably four opto-interrupters are provided and are arranged in pairs on either side of the fore-and-aft axis of the steered wheel at spaced intervals on a circular path along which said optical shield moves on movement of the steered wheel.

An embodiment of the present invention will now be described by way of example only with reference to the accompanying drawings, in which:-

    Fig. 1 shows diagrammatically the steerable wheel of a three wheeled electrically powered vehicle and control gear associated therewith;

    Fig. 2 shows a plan of the control gear; and

    Fig. 3 a sectional elevation through the line II II of Fig. 2.

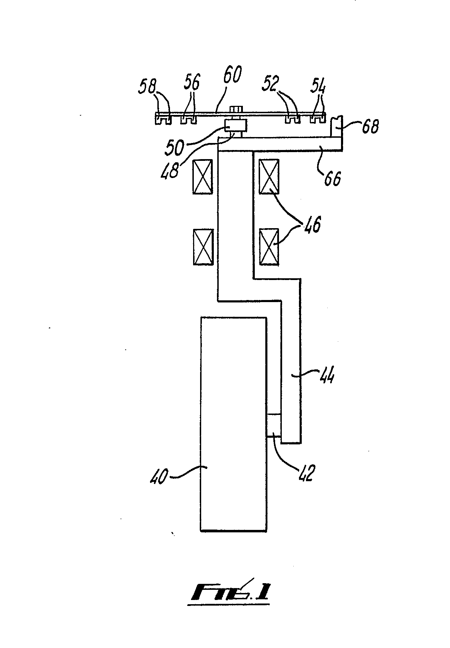

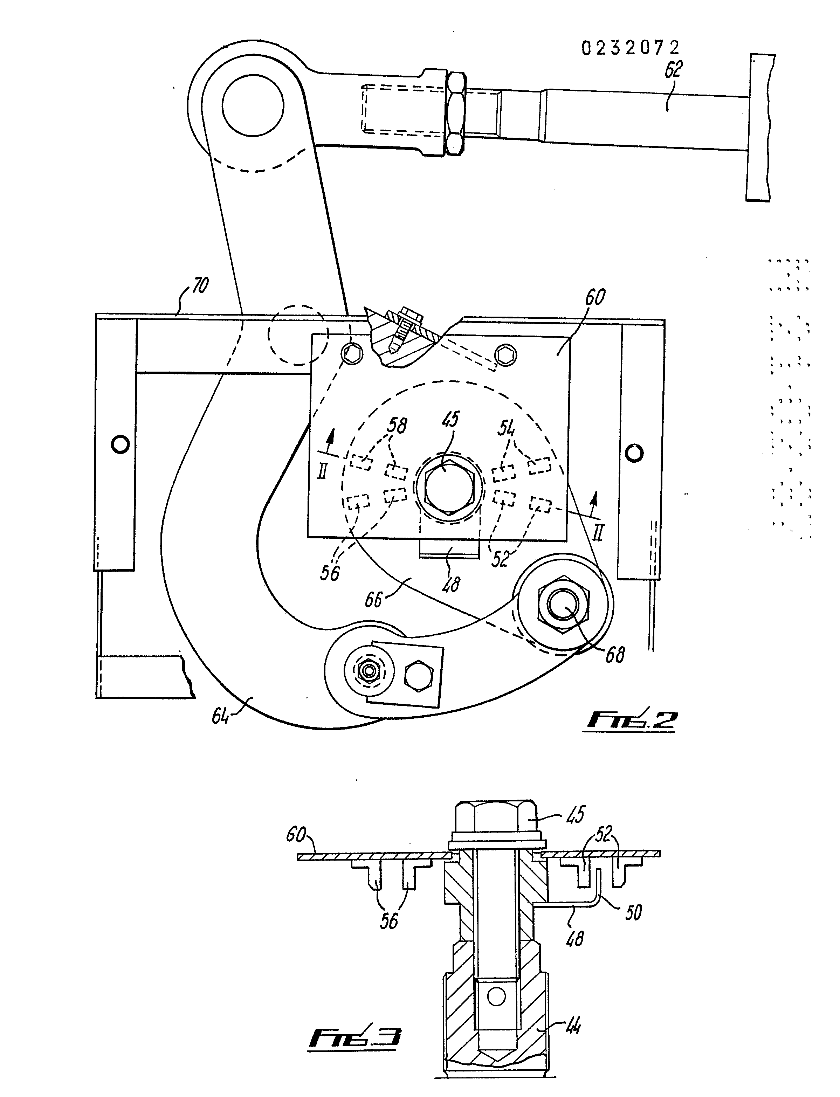

Fig. 1 shows the steered wheel 40 of a three wheel fork lift truck lying along the fore-and-aft axis of the vehicle, that is positioned so that the vehicle can be driven in a straight line. The wheel 40 is supported by a stub-axle 42 on a support structure 44 rotatably mounted by bearings shown diagrammatically at 46 on the truck framework which is not shown. An arm 48 is fixed near the top of the framework 44 by a bolt 45 (Figs. 2 and 3), the arm 48 having an optical shield 50 projecting upwardly from a point adjacent its periphery.

It will be realised, therefore, that when the framework 44 is rotated in the bearing 46 by means of an hydraulic ram 62 (only part of which is shown in Fig. 2) acting on a pivotted crank 64 which is kinked to a steering arm 66 by a pin 68 the shield 50 will move along a circular path to the right or left depending upon the movement of the framework 44.

It is required that a signal is given when the wheel 40 has been steered to either side through a predetermined angle, for example 60°, so that at this point the traction motor on the inside of the curve being negotiated, can be disconnected from its power supply so that it may coast.

It is further required that when the steered wheel approaches 90° from the fore-and-aft position, on either side thereof, a signal is given so that the inner motor can be driven in a reverse direction.

In the embodiment shown in the drawings two pairs of opto-interrupters are provided to give these signals. The first pair 52, 54 are arranged on the right hand side of the fore-and-aft axis as viewed in Figs. 1 and 2 while the second pair 56, 58 are arranged on the left hand side of the axis. All the interrupters are arranged on a printed circuit board 60 rigidly mounted on the truck's framework 70 in position such that the optical gaps therein lie on the circular path defined by the optical shield 50 on movement thereof. In use each interrupter comprises a substantially U-shaped body across the gap of which is projected some form of infra-red or other radiant energy which is detected by a detector on the side of the gap opposite from the projector unless the gap is interrupted, for example by the shield 50. It will be realised, therefore, that in operation on turning the steerable wheel 40 so that the shield 50 moves to the right hand side of the fore-and-aft axis as viewed in Fig. 2 the shield 50 will first pass through the gap of the interrupter 52 at 60° turn, and thereafter if steering movement in that direction is continued will eventually also occupy the gap in the interrupter 54 at 90° turn.

The signals from the various opto-interrupters 50 - 58 are fed to a logic system on a separate but closely adjacent printed circuit board (not shown) into which are fed indirectly or directly also signals from an accelerator pedal of the truck and from a safety seat switch, the logic system deciding which contactors controlling the power supply to the traction motors should be on or off and driving the contactor coils for the contactors via V-mos power devices so that the desired drive configuration is achieved for respective steered wheel positions.

The assembly described above substantially reduces component parts and interconnections normally employed with microswitches and associated wiring to remote logic systems and consequently achieves a substantial cost saving as well as a considerable increase in operating reliability and efficiency.

The logic system is a digital system which incorporates safety circuits resulting in fail to safe occuring in the event of a fault arising in any of the opto-interrupters. The digital signals are encoded to provide contactor energization. The circuit board includes also a stabilised supply capable of short circuit overload and recovery. It has thermal and current shut down which protects the board and components from damage. When a fault is removed the circuit recovers.

The circuit incorporates also a 90° lock pulse reduction circuit which prevents unsafe speeds at 90° steering angles and sound generating means actuable if the vehicle is left in a potentially dangerous condition sensed by the circuit.

## Claims

1. A control arrangement for the traction motors of a three-wheeled electrically powered vehicle having a single steered wheel, the other wheels each provided with a separate traction motor, characterised in that the arrangement comprises at least one member (50) movable on movement of the steered wheel (40) and adapted to co-operate with at least one non-mechanical sensor (52-58), the signal from which is utilised to control the power supply to one, other, or both traction motors

2. An arrangement as claimed in claim 1 characterised in that the or each non-mechanical sensor (52-58) is an opto-interrupter and the member (50) is an optical shield.

3. An arrangement as claimed in claim 2, characterised in that four opto-interrupters (52-58) are provided and are arranged in pairs on either side of the fore-and-aft axis of the steered wheel (40) at spaced intervals on a circular path along which said optical shield moves on movement of the steered wheel.

4. An arrangement as claimed in claim 2 or claim 3, characterised in that signals from the opto-interrupters (52-58) are fed to a circuit (60) the output from which actuates contractors controlling the power supply of the traction motors to interrupt power to each motor or to reverse the direction of the power supply.

5. An arrangement as claimed in claim 4, characterised in that signals are supplied to said circuit from means sensing the position of the vehicle accelerator pedal and/or the vehicle steering means and/or a vehicle safety switch which is operable only when the driver is on the vehicle.

6. An arrangement as claimed in claim 4 or claim 5, characterised in that the circuit includes sound generating means actuable if the vehicle is left in a potentially dangerous condition sensed by the circuit.

7. An arrangement as claimed in any one of claims 4 to 6, characterised in that the circuit decodes signals fed thereto by a digital system.

8. An arrangement as claimed in any one of claims 4 to 7, characterised in that the circuit incorporates also a fail to safe system which operates in the event of a fault arising in any of the opto-interrupters.

9. An arrangement as claimed in any one of claims 4 to 8, characterised in that the circuit has a stabilised supply capable of short circuit overload and recovery.

10. An arrangement as claimed in any one of claims 4 to 9, characterised in that the circuit has thermal and current shut down to protect the board and components from damage.

FIG.1

0232072

Fig.2

Fig.3